# EUROPEAN PATENT APPLICATION

(11) **EP 4 113 264 A1**
(43) Date of publication of application: **04.01.2023**
(21) Application number: 21760717.5
(22) Date of filing: 02.02.2021
(51) Int. Cl.: G06F 3/0484

(54) **DISPLAY CONTROL METHOD, APPARATUS AND LAUNDRY DEVICE**

(30) Priority: 26.02.2020 CN 202010121518
(71) Applicant: Qingdao Haier Drum Washing Machine Co., Ltd., Shandong 266101 (CN); Haier Smart Home Co., Ltd., Qingdao, Shandong 266101 (CN)
(72) Inventor: WU, Jun, Qingdao, Shandong 266101 (CN); LI, Wenwei, Qingdao, Shandong 266101 (CN); NIU, Yanjuan, Qingdao, Shandong 266101 (CN); WANG, Guangfeng, Qingdao, Shandong 266101 (CN); HUANG, Zhenxing, Qingdao, Shandong 266101 (CN); HE, Yunfeng, Qingdao, Shandong 266101 (CN)
(74) Representative: Barker Brettell LLP
(86) International application number: PCT/CN2021/074868
(87) International publication number: WO 2021/169753

(57) **Abstract**

The present invention provides a display control method, an apparatus, and a laundry device. The method includes receiving a first instruction for starting a remote-control mode; controlling a numerical value display area of the display panel to display a remote-control identification character according to the first instruction; controlling the numerical value display area to alternately display the remote-control identification character and a running time if a second instruction for starting a target program sent by a terminal is received within a preset time, so that other people expect a terminal holder can learn about a running state of the laundry device under a terminal remote control mode, so as to avoid a program suspension or a safety problem caused by misoperation.

## Description

### CROSS-REFERENCE TO RELATED APPLICATIONS

The present application claims priority to Chinese Patent Application No. 202010121518.6, titled "DISPLAY CONTROL METHOD, APPARATUS, AND LAUNDRY DEVICE", filed with the China National Intellectual Property Administration on February 26, 2020, which is hereby incorporated by reference in its entirety.

### TECHNICAL FIELD

The present invention relates to smart home technologies and, in particular, to a display control method, apparatus, and laundry device.

### BACKGROUND

With the improvement of living standards, a laundry device, such as a washing machine, has become an essential household appliance for every family. More and more people choose to use the laundry device to wash clothes instead of traditional hand washing.

In order to facilitate users to control the laundry device anytime and anywhere, most of the current intelligent laundry devices have a remote-control function, and the users can remotely control the laundry device through an application program on a terminal. For example, the users put clothes to be washed into the washing machine before going out, and control the washing machine remotely through a mobile phone to start washing one hour before going home. In this way, the washing machine completes the washing just after the users come home, and the user can immediately dry or store the clothes.

However, when remotely controlling the laundry device through the terminal, the users can only view a running status of the laundry device through the terminal, which will lead to a problem that other people at home except a terminal holder cannot learn about a current running status of the laundry device.

### SUMMARY

The present invention provides a display control method, apparatus, and laundry device, so that the user can learn about a running status of the laundry device under a remote-control mode, so as to avoid a program suspension or a safety problem caused by a misoperation.

In a first aspect, the present invention provides a display control method, which is applied to a laundry device, the laundry device includes a display panel; and the method includes:
receiving a first instruction for starting a remote-control mode;
controlling a numerical value display area of the display panel to display a remote-control identification character according to the first instruction,
controlling the numerical value display area to alternately display the remote-control identification character and a running time if a second instruction for starting a target program sent by a terminal is received within a preset time.

Optionally, after controlling the numerical value display area to display the remote-control identification character, the method further includes:
receiving a third instruction for selecting a target drum sent by the terminal, where the target drum is an upper drum of the laundry device or a lower drum of the laundry device;
controlling an identification display area of the display panel to display an identification of the target drum according to the third instruction.

Optionally, the method further includes:
controlling the identification display area of the display panel to display the identification of the target program if the second instruction for starting the target program sent by a terminal is received within a preset time.

Optionally, the method further includes:
controlling the display panel to turn off the display if the second instruction is not received within the preset time.

Optionally, the display panel includes a touch area, and the method further includes:
controlling the identification display area of the display panel to display an identification of a program corresponding to the target drum and controlling the numerical value display area to display the running time if the second instruction is not received within a preset time and a fourth instruction for selecting the target drum sent by a user through the touch area is received.

Optionally, the method further includes:
controlling the identification display area of the display panel to display a door lock identification if the second instruction for starting the target program sent by the terminal is received within a preset time.

Optionally, the method further includes:
controlling the numerical value display area to display a remote-control end identification character after an operation of the target program is completed.

In a second aspect, the present invention provides a display control apparatus, which is applied to a laundry device. The laundry device includes a display panel, and the display panel includes a numerical value display area; and the apparatus includes:
a receiving module, configured to receive a first instruction for starting a remote-control mode; and
a controlling module, configured to control a numerical value display area to display a remote-control identification character according to the first instruction;
the controlling module is further configured to control the numerical value display area to alternately display the remote-control identification character and a running time if a second instruction for starting a target program sent by a terminal is received by the receiving module within a preset time.

Optionally, the receiving module is further configured to receive a third instruction for selecting a target drum sent by the terminal, where the target drum is an upper drum of the laundry device or a lower drum of the laundry device;
correspondingly, the controlling module is further configured to control an identification display area of the display panel to display an identification of the target drum according to the third instruction.

Optionally, the controlling module is further configured to control the identification display area of the display panel to display an identification of the target program if the second instruction for starting the target program sent by a terminal is received by the receiving module within a preset time.

Optionally, the controlling module is further configured to control the display panel to turn off the display if the second instruction is not received by the receiving module within the preset time.

Optionally, the display panel includes a touch area, and the controlling module is further configured to control the identification display area of the display panel to display an identification of a program corresponding to the target drum and control the numerical value display area to display the running time if the second instruction is not received by the receiving module within a preset time and a fourth instruction for selecting the target drum sent by a user through the touch area is received by the receiving module.

Optionally, the controlling module is further configured to control the identification display area of the display panel to display a door lock identification if the second instruction for starting the target program sent by the terminal is received by the receiving module within a preset time.

Optionally, the controlling module is further configured to control the numerical value display area to display a remote-control end identification character after an operation of the target program is completed.

In a third aspect, the present invention provides a laundry device including a memory, a processor, and a display device;
the memory is configured to store a computer program; and
the processor is configured to control the display device to implement any of the methods as described in the above first aspect when the computer program is executed.

In a fourth aspect, the present invention provides a computer-readable storage medium having a computer program stored thereon, and the computer program, when executed by a processor, implements any of the methods as described in the above first aspect.

The present invention provides a display control method, apparatus, and laundry device. The method includes receiving a first instruction for starting a remote-control mode, controlling a numerical value display area of the laundry device to display a remote-control identification character according to the first instruction, so that other people expect a terminal holder can learn about that the laundry device is under the remote-control mode according to the remote-control identification character. In addition, under the remote control mode, the numerical value display area is controlled to alternately display the remote-control identification character and a running time if the second instruction for starting a target program sent by a terminal is received within a preset time, so that other people expect the terminal holder can also learn about a running status of a current program, thus avoiding a program suspension or a safety problem caused by a misoperation before an end of operation of the program.

### BRIEF DESCRIPTION OF DRAWINGS

In order to more clearly explain the technical solution of an embodiment of the present invention or in the prior art, the following will briefly introduce the drawings that need to be used in the description of the embodiment or the prior art. It is obvious that the drawings in the following description are some embodiments of the present invention. For those skilled in the art, other drawings can be obtained from these drawings without creative work.
FIG. 1 is a first interface diagram of a display panel provided by the present invention;
FIG. 2 is a flow diagram of a display control method provided by the present invention;
FIG. 3 is a second interface diagram of a display panel provided by the present invention;
FIG. 4 is a third interface diagram of a display panel provided by the present invention;
FIG. 5 is a fourth interface diagram of a display panel provided by the present invention;
FIG. 6 is a fifth interface diagram of a display panel provided by the present invention;
FIG. 7 is a sixth interface diagram of a display panel provided by the present invention;
FIG. 8 is a seventh interface diagram of a display panel provided by the present invention;
FIG. 9 is an eighth interface diagram of a display panel provided by the present invention;
FIG. 10 is a ninth interface diagram of a display panel provided by the present invention;
FIG. 11 is a tenth interface diagram of a display panel provided by the present invention;
FIG. 12 is a structural diagram of a display control apparatus provided by the present invention; and
FIG. 13 is a structural diagram of a laundry device provided by the present invention.

### DESCRIPTION OF EMBODIMENTS

In order to make the purpose, technical solution and advantages of embodiments of the present invention clearer, the technical solutions in the embodiments of the present invention will be described clearly and completely below in combination with the drawings in the embodiments of the present invention. Obviously, the described embodiments are a part of the embodiments of the present invention, not all of them. Based on the embodiments in the present invention, all other embodiments obtained by those skilled in the art without creative work belong to the scope of the present invention.

Currently most intelligent laundry devices have a remote-control function, and a user can remotely control the laundry device through an application program on a terminal. For example, the user puts clothes to be washed into the washing machine before going out, and remotely controls the washing machine through a mobile phone to start washing one hour before going home. In this way, the washing machine completes the washing just after the user comes home, and the user can immediately dry or store the clothes. However, when remotely controlling the laundry device through the terminal, the user can only view a running status of the laundry device through the terminal, which will lead to a problem that other people at home, except a terminal holder, cannot learn about the running status of the laundry device.

In order to ensure that both a remote terminal holder and other people at home can timely learn about the running status of the laundry device when the laundry device is remotely controlled through the terminal, and avoid a misoperation of the laundry device by people at home due to that they do not learn about the current running status of the laundry device, it is necessary to display the running status of the laundry device on a display panel of the laundry device, so as to prompt people other than the terminal holder.

To this end, the present invention provides a display control method, where when the laundry device is under a remote-control mode, a corresponding prompt of the remote control is displayed on the display panel of the laundry device, so that the user can clearly learn about that the laundry device is currently under the remote-control mode. At the same time, after the laundry device starts running, a running time of washing program is also displayed on the display panel, so as to avoid a suspension of the current running program or an occurrence of a safety problem caused by a misoperation of a user before the running time ends.

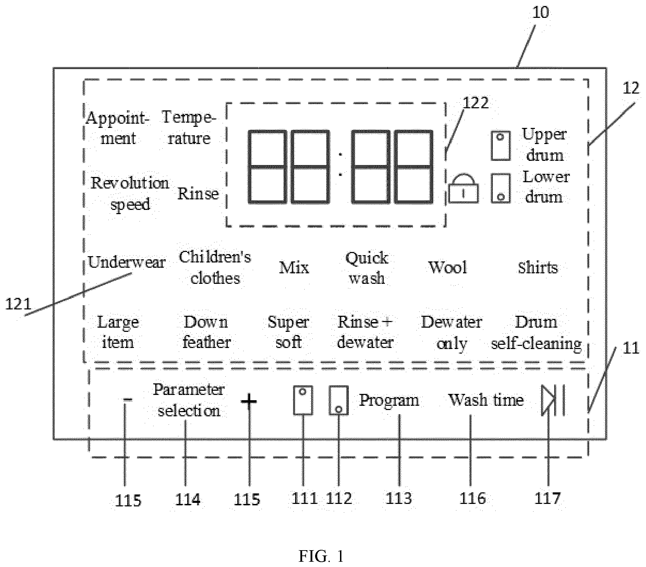

Firstly, a display panel of the laundry device involved in the present invention is introduced. FIG. 1 is a first interface diagram of a display panel provided by the present invention. As shown in FIG. 1, the display panel 10 includes a touch area 11 and a display area 12.

The touch area 11 includes a plurality of touch buttons for selecting an upper drum or a lower drum, selecting a program, selecting and adjusting a parameter, setting running time, and starting and pausing. For example, the user can select an upper drum by touching an upper drum selection button 111, select a lower drum by touching a lower drum selection button 112, select a washing program by touching a program selection button 113, select a washing parameter by touching a parameter selection button 114, adjust parameter magnitude by a parameter adjustment button 115, and set a running time by a washing-time button 116, and start or pause a washing program by a start-pause button 117. The user may select, set, start, and pause the washing program through the touch area 11, and may also perform a remote control through a terminal, for example, an application program (APP) installed on a mobile phone.

The display area 12 includes an identification display area 121 and a numerical value display area 122. The identification display area 121 is configured to display upper and lower drum identification, program identification and parameter identification. Optionally, it is also configured to display a door lock identification. The numerical value display area 122 is configured to display the running time and a parameter value. In addition, under a remote-control mode, the numerical value display area 122 is further configured to display a remote-control identification character, such as a word "APP".

The display control method provided by the present invention is described in detail below in combination with specific embodiments. It is understandable that the following specific embodiments can be combined with each other, and the same or similar concepts or processes may not be repeated in some embodiments.

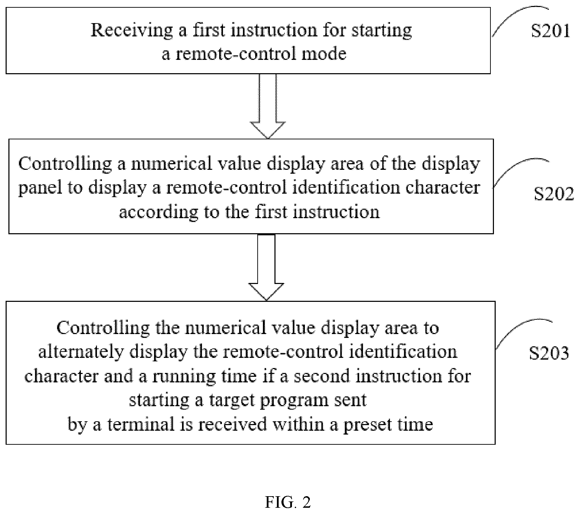

FIG. 2 is a flow diagram of a display control method provided by the present invention. As shown in FIG. 2, the method includes:

S201. Receiving a first instruction for starting a remote-control mode.

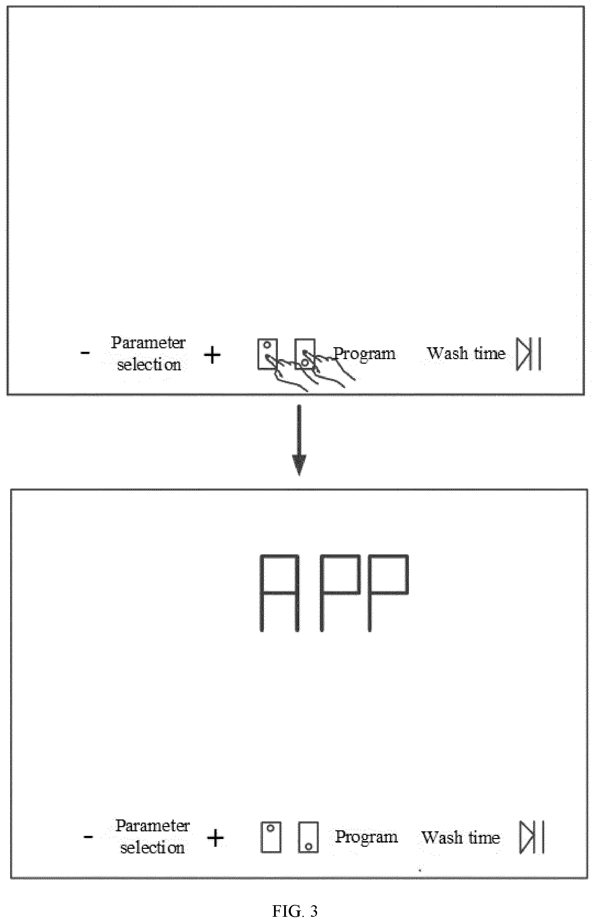

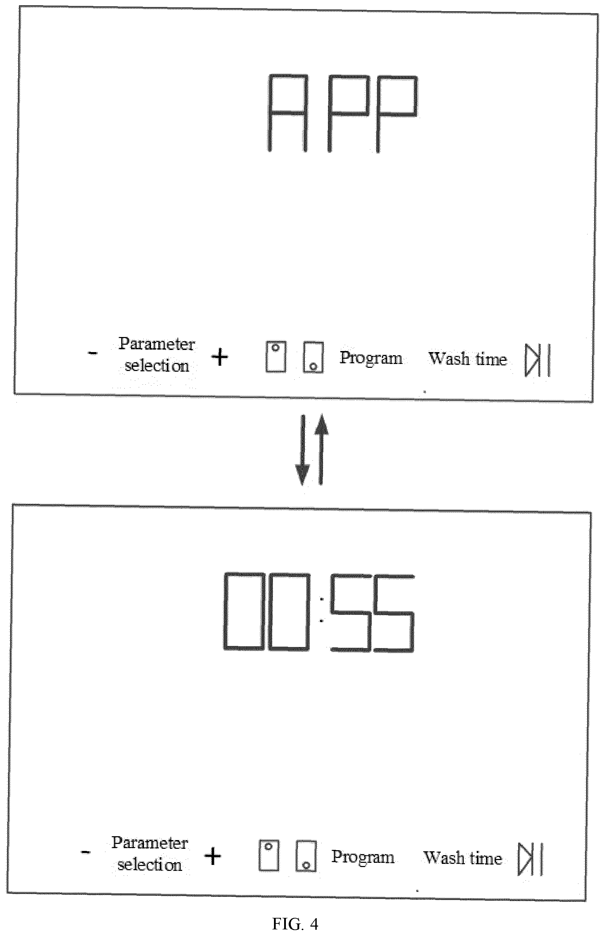

The first instruction for starting the remote-control mode can be sent by a user through the laundry device itself. Exemplarily, referring to FIG. 3, when the user touches the upper drum selection button and the lower drum selection button at the same time, the laundry device enters the remote-control mode. The first instruction can also be sent by the user through a terminal. Please refer to FIG. 4, the user clicks a start remote-control button on a mobile phone application program to send the first instruction to the laundry device, and the laundry device can enter the remote-control mode after receiving the instruction.

S202. Controlling a numerical value display area to display a remote-control identification character according to the first instruction.

After receiving the first instruction, the laundry device enters the remote-control mode. At this time, the user can set the washing program and the parameter through the terminal. At the same time, the laundry device further controls the numerical value display area of the display panel to display the remote-control identification character. Exemplarily, please continue to refer to FIG. 3, the numerical value display area displays the word "APP" to prompt other people except the terminal holder.

S203. Controlling the numerical value display area to alternately display the remote-control identification character and a running time if a second instruction for starting a target program sent by a terminal is received within a preset time.

After the laundry device enters the remote-control mode, the user can set the washing program through a terminal. For example, the user may choose a default program, such as one of underwear, children's clothes, mix, quick wash, wool, shirts, large item, down feather, super soft, rinse + dewater, dewater only, and drum self-cleaning. Alternatively, the user may set one or more parameters, such as wash time, heat temperature, rinse times, dewater revolution speed, stop-washing time, water level for washing, water level for rinsing, stop-rinsing time, appointment, additional function, dry and other parameters. The user sends the set program and/or parameter to the laundry device through the terminal, and then may send a second instruction for starting a target program to the laundry device by clicking a start button on the terminal, and after receiving the second instruction, the laundry device can start the washing program.

After the laundry device receives the second instruction to start washing clothes, the running time of the target program is displayed in the numerical value display area of the display panel, and the remote-control identification character and the running time can be alternatively displayed, so that other people expect a terminal holder can learn about the running status in time, thus avoiding a suspension of a current running program or an occurrence of a safety problem caused by a misoperation before an end of the running time.

Exemplarily, please refer to FIG. 4, the remote-control identification character "APP" and the running time are alternately displayed in the numerical value display area, so that other people expect the terminal holder can learn about that the laundry device is currently under a remote-control mode and how long the running time is.

The display control method provided by the present embodiment includes receiving the first instruction for starting a remote-control mode, and controlling the numerical value display area of the laundry device to display the remote-control identification character according to the first instruction, so that other people expect the terminal holder can learn about that the laundry device is under the remote-control mode according to the remote-control identification character. In addition, under the remote control mode, if the second instruction for starting the target program sent by the terminal is received within a preset time, the numerical value display area is controlled to alternately display the remote control identification character and the running time, so that other people expect the terminal holder can also learn about the running status of the current program, to avoid a program suspension or a safety problem caused by a misoperation before an end of the program operation.

On the basis of the above embodiments, for a laundry device with an upper drum and a lower drum, the user will select a target drum to be used, that is, an upper drum or a lower drum, before setting a washing program through a terminal device. That is, the laundry device receives a third instruction for selecting a target drum sent by the user through the terminal; and the identification display area is controlled to display an identification of the target drum according to the third instruction.

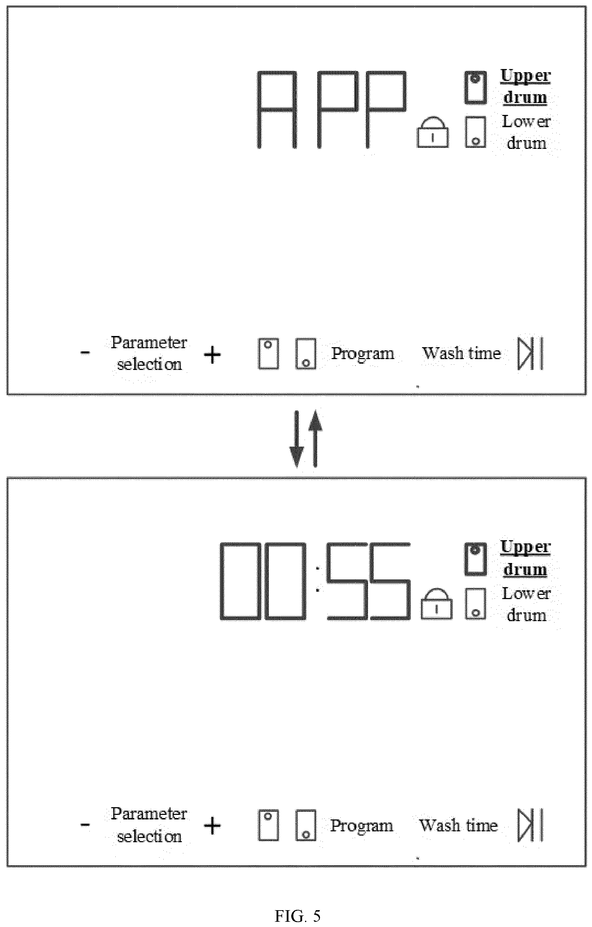

Exemplarily, please refer to FIG. 5, it is assumed that the user selects the upper drum through the terminal device, then the laundry device controls the identification display area of the display panel to display an identification of the upper drum. In this embodiment, a display way of the target drum is not limited, for example, the identification of the target drum is displayed with a first brightness, and the identification of the other drum is displayed with a second brightness, and the first brightness is greater than the second brightness. Or, the identification of the target drum is flashing or is always on, and the identification of the other target drum is not displayed. By displaying the identification of the target drum in the identification display area, other people expect the terminal holder can learn about the current use situation of the laundry device to avoid a misoperation.

In addition, on the basis of the above embodiment, the user sends a second instruction for starting a target program through a terminal. Correspondingly, after receiving the second instruction by the laundry device, the laundry device can also display an identification of the target program in the identification display area. That is, if the second instruction for starting the target program sent by the terminal is received within a preset time, the identification display area is controlled to display the identification of the target program.

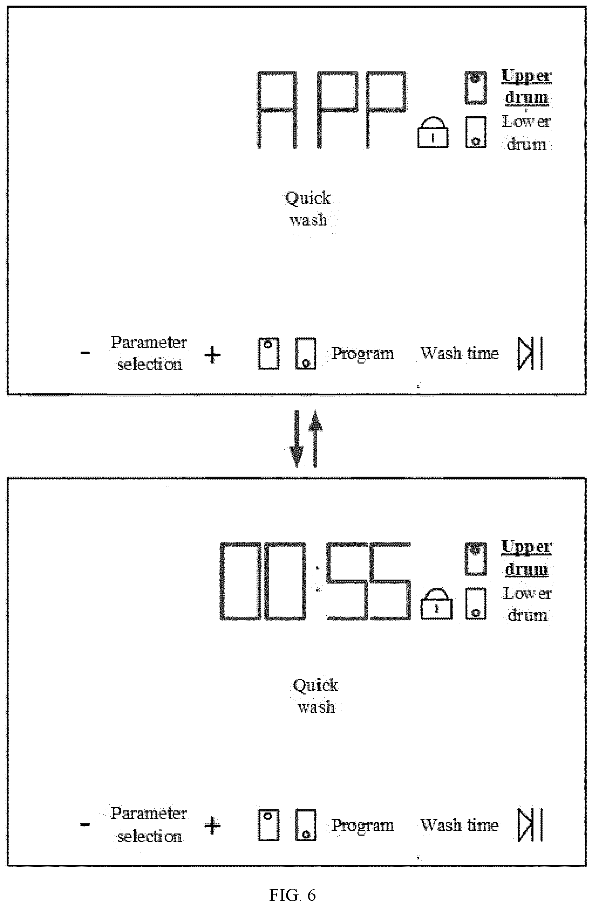

Exemplarily, please refer to FIG. 6, if the target program selected by a user through a terminal device is quick wash, the laundry device controls the identification display area of the display panel to display an identification of the quick wash.

Optionally, after receiving the second instruction for starting a program sent by the terminal, the laundry device further controls the identification display area to display a door lock identification.

Please continue to refer to FIG. 5, in order to ensure the safety in the washing process and avoid a danger caused by a misoperation, the door lock of the laundry device is closed during the washing process. At the same time, the laundry device controls the identification display area to display an identification of the door lock to prompt the user.

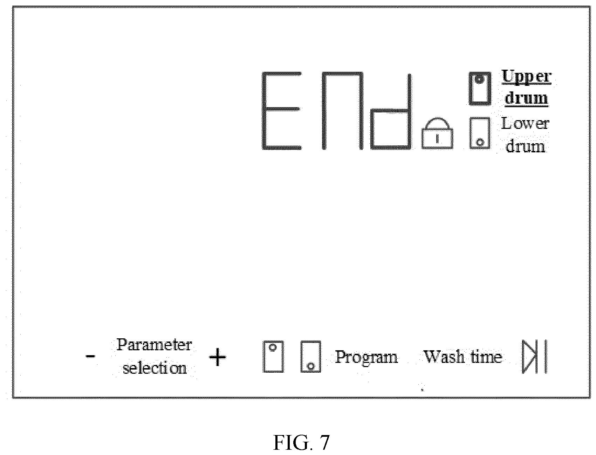

Optionally, after the program is completed, the laundry device controls the numerical value display area to display a remote-control end identification character. Exemplarily, please refer to FIG. 7, after the program is completed, the laundry device controls the numerical value display area to display the word "End" to prompt other people expect a terminal holder. In this way, other people expect the terminal holder can carry out other operation on the laundry device after seeing the word "End", and do not worry about causing a suspension of the running program or other safety problem.

In the above embodiments, the display control method of the display panel is described in the case where the user selects a target drum, sets a program and/or parameter through a terminal and starts the operation of the target program after the laundry device receives the first instruction for starting the remote-control mode and enters the remote-control mode.

In another case, the user sends the first instruction through the laundry device itself or a terminal to make the laundry device perform the remote-control mode, but after that, the user may not continue to send the second instruction for starting the target program through the terminal. In this case, if the second instruction is not received within the preset time, the laundry device controls the display panel to turn off the display.

In still another case, the user sends the first instruction through the laundry device itself or a terminal to make the laundry device perform the remote-control mode, and then, the user does not send the second instruction for starting the program through the terminal, but selects the target drum through the touch area of the display panel, that is, the washing setting is carried out by operating the laundry device itself; and at this time, the laundry device exits the remote-control mode. In this case, if the laundry device does not receive the second instruction within a preset time but receives a fourth instruction for selecting a target drum sent by the user through the touch area, the identification display area is controlled to display an identification of a program corresponding to the target drum, and the numerical value display area is controlled to display a running time.

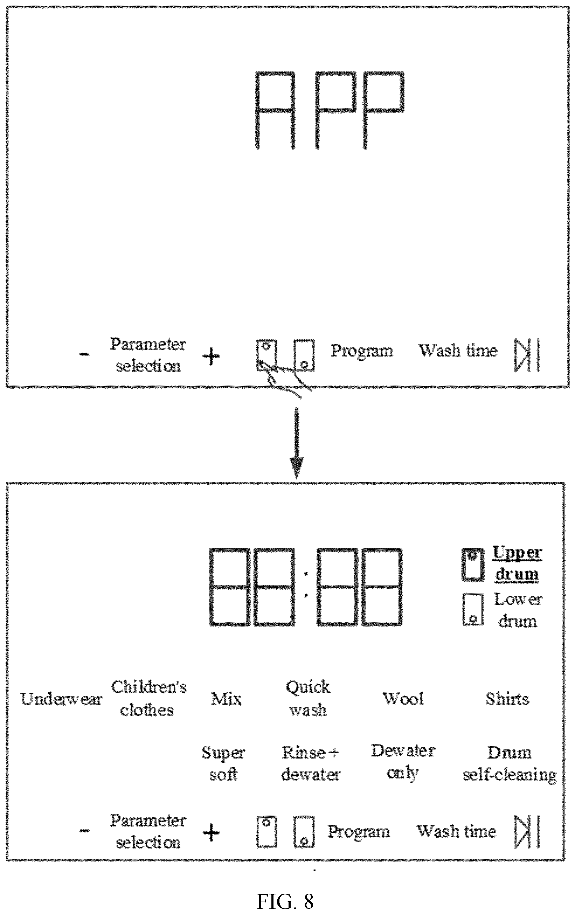

Exemplarily, please refer to FIG. 8, after the laundry device enters the remote-control mode, the numerical value display area of the display panel displays the word "APP". Then, the user touches an upper drum selection button of the display panel to select the upper drum. At this time, the laundry device exits the remote-control mode, the laundry device controls the numerical value display area to no longer display the word "APP", and the identification display area is controlled to display an identification of a selectable program corresponding to the upper drum, such as underwear, children's clothes, mix, quick wash, wool, shirt, super soft, risen + dewater, dewater only and drum self-cleaning. At the same time, the laundry device further controls the numerical value display area to display the running time corresponding to the selectable program.

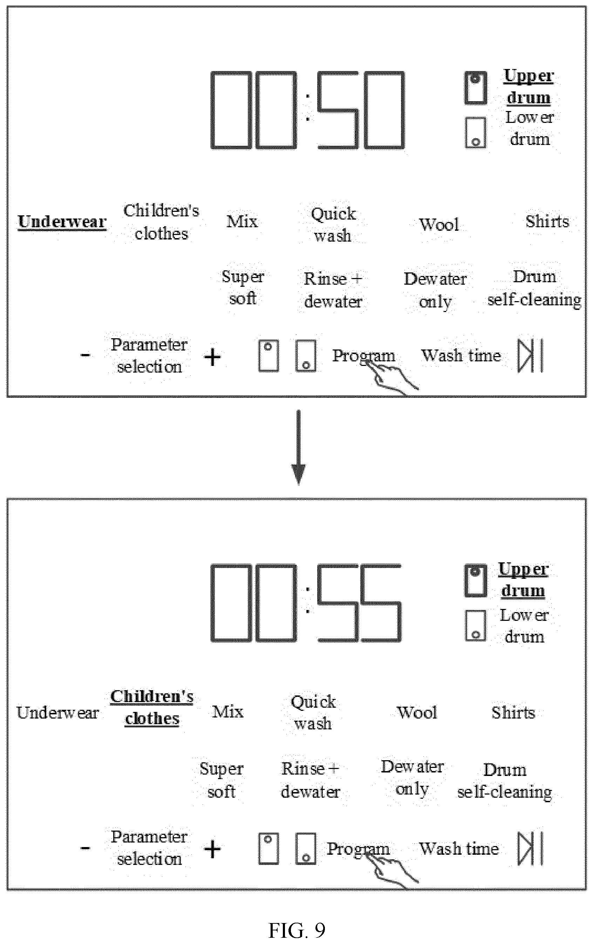

When the user sets the washing program through the laundry device itself, i.e., through the touch area of the display panel, please refer to FIG. 9, the user touches the program selection button to select a program, and the selectable programs corresponding to the upper drum include underwear, children's clothes, mix, quick wash, wool, shirt, super soft, rinse + dewater, dewater only and drum self-cleaning. For example, when the user touches the program selection button for the first time, the first program, underwear, is selected as a target program, and at this time, a program identification of the underwear is displayed in a first way, and other programs in the upper drum selectable program are displayed in a second way, where the first way is different from the second way. The present embodiment does not limit the specific display way, as long as it is convenient for the user to distinguish. The user touches the program selection button for the second time, and then the second program, children's clothes, is selected as the target program, and at this time, the program identification of children's clothes is displayed in a first way, and other programs in the upper drum selectable program are displayed in a second way. By analogy, the user can touch the program selection button many times to sequentially select corresponding programs on the upper drum as target programs. Optionally, after the user selects a target program, the numerical value display area of the display panel displays a corresponding running time of the target program.

In the above embodiment, after the laundry device enters the remote-control mode, if an instruction for starting a target program sent by a user through a terminal is not received within a preset time, the laundry device exits the remote-control mode, so that the terminal holder or other people expect the terminal holder can continue to operate the laundry device through the laundry device itself without worrying about misoperation.

After selecting the program through the buttons in the touch area of the laundry device itself, user can further set parameters of the program, such as appointment time, temperature, revolution speed and rinse times, and etc. After setting the parameters, user can start the program to wash clothes, or the user can directly start the program to wash clothes after selecting the program.

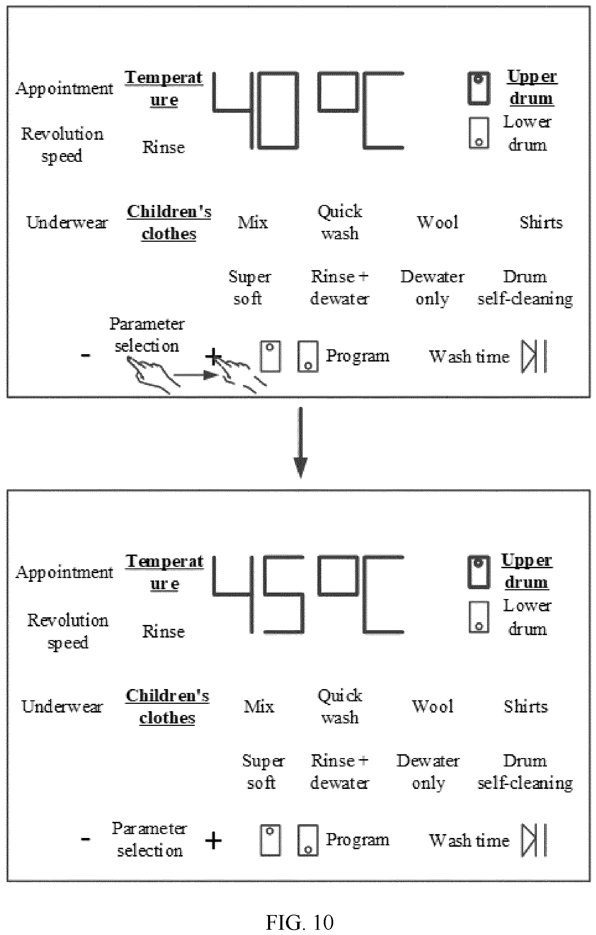

Exemplarily, please refer to FIG. 10, when the user selects the target parameter temperature, an identification of temperature is highlighted, the identification of other parameters is half-lighted, and a default value of temperature in the numerical value display area is 40 °C. The user can increase or decrease the temperature value by touching the "+" and "-" buttons in parameter adjustment buttons. The user touches the "+" or "-" button each time, an increased or decreased value can be set as required. For example, the user touches the "+" button each time, the temperature increases by 1 °C. If the user needs to set the temperature to 45 °C, the user touches the "+" button five times; if the temperature increases by 5 °C when the user touches the "+" button each time, then the user touches the "+" button once when the user needs to set the temperature to 45 °C. It is understandable that the numerical range of temperature that can be set by user is related to the target program selected by the user, with different programs corresponding to different temperature ranges.

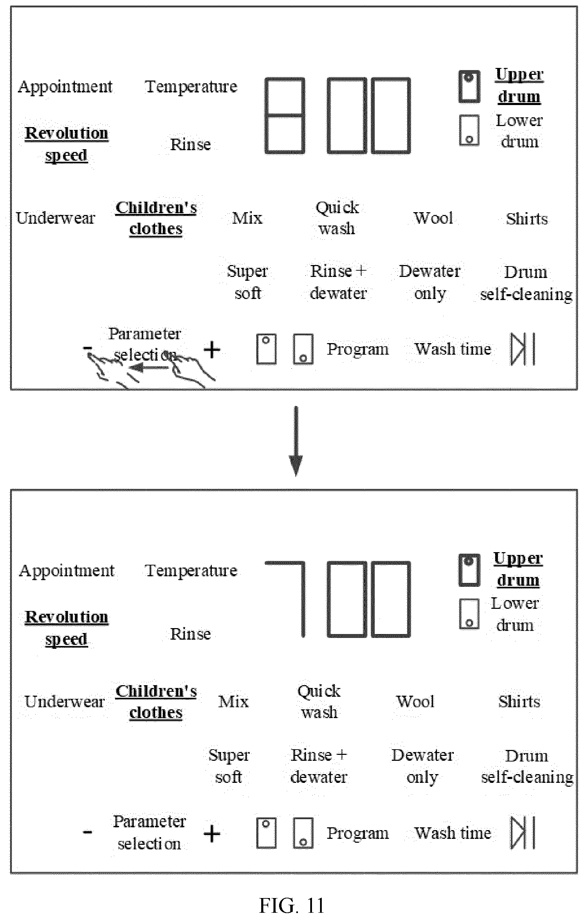

Exemplarily, please refer to FIG. 11, when the user selects a target parameter, revolution speed, an identification of revolution speed is highlighted, identifications of other parameters are half-lighted, and a default value of the revolution speed displayed in the numerical value display area is 800 °C. The user can increase or decrease the revolution speed value by touching the "+" or "-" button in the parameter adjustment buttons. When the user touches the "+" or "-" button each time, the increased or decreased value can be set as required. For example, if the revolution speed decreases by 50 when the user touches the "-" button each time, then the user may touch the "-" button twice when he needs to set the revolution speed to 700; if the revolution speed decreases by 100 r/min when the user touches the "-" button each time, then the user may touch the "-" button once when he needs to set the speed to 700 r/min. It is understandable that the numerical range of the revolution speed that can be set by a user is related to a target program selected by the user, with different programs corresponding to different revolution speed ranges.

In a process of parameter setting and adjusting, the numerical value display area can always display a parameter value, or the numerical value display area can alternately display the parameter value and running time. When the user adjusts a parameter by touching the parameter selection button and the parameter adjustment button, if there is no touch action within a preset time, it is determined that the parameter adjustment is completed, and the running time is redisplayed in the numerical value display area.

After selecting the program or setting the parameter, the user may start the program by touching the start-pause button in the touch area of the display panel, and after starting the program, the numerical value display area displays the running time instead of the parameter value.

In the above embodiment, the numerical value display area of the display panel can display the running time after selecting the program, and can also display the parameter value when adjusting the parameter, so that an interface of the whole display panel is more concise, and user can clearly understand a meaning of information displayed on the display interface when using it, so as to improve a convenience of operation of the user.

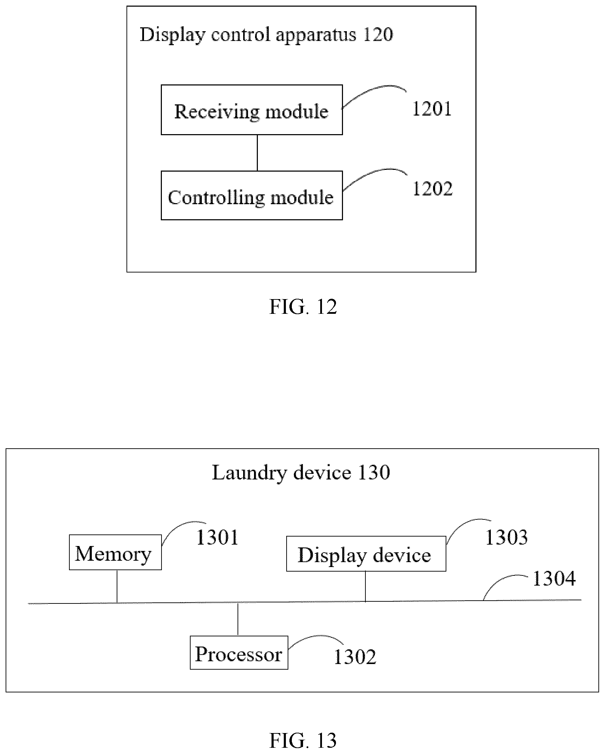

FIG. 12 is a structural diagram of a display control apparatus provided by the present invention. As shown in FIG. 12, the apparatus 120 includes:
a receiving module 1201, configured to receive a first instruction for starting a remote-control mode; and
a controlling module 1202, configured to control a numerical value display area to display a remote-control identification character according to the first instruction.

The controlling module 1202 is further configured to control the numerical value display area to alternately display the remote-control identification character and a running time if a second instruction for starting a target program sent by a terminal is received by the receiving module 1201 within a preset time.

Optionally, the receiving module 1201 is further configured to receive a third instruction for selecting a target drum sent by the terminal, where the target drum is an upper drum of a laundry device or a lower drum of the laundry device;
correspondingly, the controlling module 1202 is further configured to control an identification display area of the display panel to display an identification of the target drum according to the third instruction.

Optionally, the controlling module 1202 is further configured to control the identification display area of the display panel to display an identification of a target program if the second instruction for starting the target program sent by a terminal is received by the receiving module 1201 within a preset time.

Optionally, the controlling module 1202 is further configured to control the display panel to turn off the display if the second instruction is not received by the receiving module 1201 within the preset time.

Optionally, the display panel includes a touch area, and the controlling module 1202 is further configured to control the identification display area of the display panel to display an identification of a program corresponding to the target drum and control the numerical value display area to display the running time if the second instruction is not received by the receiving module 1201 within a preset time and a fourth instruction for selecting the target drum sent by a user through the touch area is received.

Optionally, the controlling module 1202 is further configured to control the identification display area of the display panel to display a door lock identification if the second instruction for starting the target program sent by the terminal is received by the receiving module 1201 within a preset time.

Optionally, the controlling module 1202 is further configured to control the numerical value display area to display a remote-control end identification character after an operation of the target program is completed.

The display control apparatus provided by the present embodiment can be used to implement the display control method in any one of the above method embodiments. Its implementation principle is similar to the technical effect, and will not be repeated here.

FIG. 13 is a structural diagram of a laundry device provided by the present invention. As shown in FIG. 13, the laundry device 130 includes a memory 1301, a processor 1302, and a display device 1303. The memory 1301, the processor 1302, and the display device 1303 may be communicated via a bus 1304.

The memory 1301 is configured to store a computer program.

The processor 1302 is configured to control the display device 1303 to implement the method as in any one of the above embodiments when the computer program is executed.

The present invention provides a computer-readable storage medium having a computer program stored thereon, and the computer program implements the method in any one of the above embodiments when executed by a processor.

Those skilled in the art can understand that all or part of the steps to realize the above method embodiments can be completed by hardware related to program instructions. The aforementioned program can be stored in a computer readable storage medium. When the program is executed, the steps including the above method embodiments are executed; the aforementioned storage media include ROM, RAM, magnetic disc or optical disc and other media that can store program codes.

Finally, it should be noted that the above embodiments are only used to illustrate the technical solution of the present invention, not to limit it. Although the present invention has been described in detail with reference to the above-mentioned embodiments, those skilled in the art should understand that it can still modify the technical solutions recorded in the above-mentioned embodiments, or equivalently replace some or all of the technical features therein; these modifications or replacements do not make the essence of the corresponding technical solutions depart from the scope of the technical solutions of the embodiments of the present invention.

## Claims

1. A display control method, **characterized in that** the method is applied to a laundry device, the laundry device comprises a display panel, the method comprises:
receiving a first instruction for starting a remote-control mode;
controlling a numerical value display area of the display panel to display a remote-control identification character according to the first instruction; and
controlling the numerical value display area to alternately display the remote-control identification character and a running time if a second instruction for starting a target program sent by a terminal is received within a preset time.

2. The method according to claim 1, wherein after controlling the numerical value display area to display the remote-control identification character, the method further comprises:
receiving a third instruction for selecting a target drum sent by the terminal, wherein the target drum is an upper drum of the laundry device or a lower drum of the laundry device; and
controlling an identification display area of the display panel to display an identification of the target drum according to the third instruction.

3. The method according to claim 1, further comprising:
controlling an identification display area of the display panel to display an identification of the target program if the second instruction for starting the target program sent by the terminal is received within the preset time.

4. The method according to claim 1, further comprising:
controlling the display panel to turn off the display if the second instruction is not received within the preset time.

5. The method according to claim 1, wherein the display panel comprises a touch area, and the method further comprises:
controlling an identification display area of the display panel to display an identification of a program corresponding to a target drum and controlling the numerical value display area to display the running time if the second instruction is not received within the preset time and a fourth instruction for selecting the target drum sent by a user through the touch area is received.

6. The method according to claim 1, further comprising:
controlling the identification display area of the display panel to display a door lock identification if the second instruction for starting the target program sent by the terminal is received within the preset time.

7. The method according to any one of claims 1-6, further comprising:
controlling the numerical value display area to display a remote-control end identification character after an operation of the target program is completed.

8. A display control apparatus, **characterized in that** the apparatus is applied to a laundry device, and the laundry device comprises a display panel, and the display panel comprises a numerical value display area, wherein the apparatus comprises:
a receiving module, configured to receive a first instruction for starting a remote-control mode; and
a controlling module, configured to control a numerical value display area to display a remote-control identification character according to the first instruction;
wherein the controlling module is further configured to control the numerical value display area to alternately display the remote-control identification character and a running time if a second instruction for starting a target program sent by a terminal is received by the receiving module within a preset time.

9. A laundry device, **characterized by** comprising a memory, a processor and a display device;
wherein the memory is configured to store a computer program, and
the processor is configured to control the display device to implement the method according to any one of claims 1-7 when the computer program is executed.

10. A computer readable storage medium having a computer program stored thereon, **characterized in that** the computer program implements the method according to any one of claims 1-7 when executed by a processor.
